# EUROPEAN PATENT SPECIFICATION

(11) **EP 3 081 391 B1**
(45) Date of publication and mention of the grant of the patent: **29.08.2018**
(21) Application number: 16154243.6
(22) Date of filing: 04.02.2016
(51) Int. Cl.: B60B 33/02, B60B 33/00

(54) **MAGNETICALLY ALIGNABLE SWIVEL CASTOR**
MAGNETISCH AUSRICHTBARE LENKROLLE
ROULETTE PIVOTANTE ALIGNABLE MAGNÉTIQUEMENT

(30) Priority: 13.04.2015 DE 202015101804 U
(43) Date of publication of application: 19.10.2016
(73) Proprietor: Penn Elcom Corporation, Tortola (VG)
(72) Inventor: Hugues, Thierry, 13800 ISTRES (FR)
(74) Representative: Patent- und Rechtsanwälte Dr. Solf & Zapf

(56) References cited:
- WO-A1-2004/020225
- WO-A2-2005/011429
- JP-A- H05 254 306
- US-A- 4 054 965

## Description

The invention relates to a swivel castor, comprising a support plate for connection to a container, and further comprising a castor mount having a castor which is rotatable about a horizontal rotation axis, wherein the castor mount is connected to the support plate so as to be rotatable about a vertical rotation axis, wherein at least one first magnet is connected to the castor mount and at least one second magnet is connected to the support plate, wherein the magnets are magnetized and disposed so as to be mutually parallel including a gap in such a manner that in an alignment of the castor mount outside a defined basic alignment of the castor mount the magnets interact in such a manner that the castor mount swings into basic alignment, wherein the support plate is connected to a saucer, and a mounting plate forms a base area of the castor mount.

Swivel castors are non-driven support wheels which are capable of automatic self-alignment in relation to the current direction of movement. They are used, for example, for office chairs, wheel chairs, and shopping trolleys.

A swivel castor of the type mentioned at the outset may also be used for transport containers. To this end, the swivel castor is attached to a container wall on a lower side of the container that faces the floor. If and when a container is to be stacked onto an upper side of another container, the swivel castor is introduced into a clearance on the upper side. The swivel castor is held in a form-fitting manner in the clearance, and is locked against pivoting and also against rolling up to a specific angle of inclination of an upper side of the container. In order for the castors to be able to be introduced into the clearance, the castors have to be inwardly pivoted to a specified alignment. In this alignment it ought to be possible for a stop which is attached to the castor to be actuated, so that the container given certain circumstances does not roll out of the clearance, for example when said container during transport is under the influence of an external force. Since pivoting of the swivel castor has to be performed manually, stacking of the boxes is time consuming and moreover associated with a certain risk of injury.

WO 2004/020225 discloses an aforementioned swivel castor. The mounting plate is secured by four bolts to a castor mount. Moreover, the magnets and the rotation mechanism of the swivel castor are located in the same area. As the rotation mechanism is located centrally in the swivel castor, the magnets of the swivel castor are located in the circumference of the rotation mechanism. The magnets are enclosed by the saucer and the mounting plate.

WO 2005/011429 discloses a swivel castor. The magnets and the rotation mechanism of the swivel castor are located in the same area: The second magnet of the swivel castor is connected to a front panel. Furthermore, the castor mount itself has a base area. The magnets are connected to the castor mount and the front panel, respectively, wherein the castor mount and the front panel enclose an intermediate space for the magnets.

US 4054965 discloses a swivel castors with magnets and rotation mechanism being located in the same area: The support plate is connected to a saucer. Moreover, the castor mount is directly connected to the magnet. The magnets are located in the circumference of the rotation axis.

JP H05 254306 discloses a swivel castor. The magnets and the rotation mechanism of the swivel castor are located at separate areas. In particular, the magnets are part of a saucer and they are located in the circumference of the rotation axis. The saucer is fixed to a mounting shaft. Furthermore, the castor mount is movable by a ball bearing. The castor mount has a magnet interacting with the magnets of the saucer. Furthermore, the magnets are located between the castor and the castor mount.
The swivel castors according to the state of the art are inconvenient because the magnets have to be specially designed.
The invention is based on the object of providing a swivel castor in which the disadvantages described above may be avoided.
The object is achieved according to the invention by the features of the characterizing part of Claim 1.
The swivel castor according to the invention is characterized in that the mounting plate is rotatably mounted between the saucer and the support plate, wherein the castor mount has a cover plate which collectively with the saucer of the support plate and collectively with the mounting plate encloses an intermediate space for the magnets.
As separate space is provided for the magnets and for the rotation mechanism by the swivel castor according to the invention, any desired magnets can be used. Because of this, the swivel castor according to the invention can be constructed in a cheaper way. Furthermore, a design embodiment of this type enables that the bearing is disposed to as to be protected from external influences.

The swivel castor automatically swings into a specific basic alignment so that the containers may be stacked with a significantly lower temporal effort than before and with a reduced risk of injury. The magnets here are disposed in relation to one another and configured in such a manner that said magnets in the basic alignment of the castor mount attract one another at maximum force and following rotation, in particular by 180° in a common plane, repel one another at maximum force. Magnetizing in this manner shortens the time for the castor to swing in.

In one advantageous embodiment of the invention, in basic alignment of the castor mount the first magnet on that side thereof that faces the second magnet and extends so as to be transverse to the vertical rotation axis of the castor mount has a north pole and a south pole in contact therewith, and the second magnet on that face thereof that faces the first magnet and extends so as to be transverse to the vertical rotation axis has a north pole, which is parallel with the vertical rotation axis and opposite to the south pole of the first magnet, and a south pole which is parallel with the vertical rotation axis and opposite the north pole of the first magnet. This arrangement of the magnets makes it possible for the swivel castor to be able to swing in to a single desired alignment within a few seconds.
In particular, each magnet is formed from in each case two part-magnets which are disposed beside one another so as to be perpendicular to the vertical rotation axis, wherein the disposal of the north pole and of the south pole of the part-magnets extends in the direction of the vertical rotation axis, and a part-magnet in relation to the other part-magnet is disposed so as to be rotationally offset by 180° about an axis which is perpendicular to the vertical rotation axis. On account thereof, no specially manufactured magnets have to be used, so that the swivel castor may be manufactured in a cost-effective manner.

In particular, the first magnet is disposed on a side of the cover plate that faces the intermediate space, and the second magnet is disposed on a side of the saucer of the support plate that faces the intermediate space. Preferably, the cover plate on the periphery by way of two mutually opposite webs bears on the mounting plate of the castor mount. Here, there is a gap which is enclosed between the two magnets. This feature facilitates assembly or disassembly, respectively, for example for maintenance works. The cover plate here may be connected to the castor mount via connection means.

Furthermore, a stop for the swivel castor is preferably provided, wherein the stop in a blocked position interacts in a form-fitting and/or force-fitting manner with the castor and with the rotary joint which connects the castor mount and the support plate so as to be rotatable about the vertical rotation axis, and in an unblocked position releases the castor and the disc joint. Thus, the stop during stacking interacts with the clearance, since both collectively block the castor from pivoting, using dissimilar mechanisms. Additionally, the stop blocks the castor from moving about the horizontal rotation axis.

Further advantageous design embodiments of the invention may be derived from the following description of the figures and from the dependent claims. In the figures:
- Fig. 1: shows a schematic illustration of a swivel castor according to the invention;
- Fig. 2: shows a cross section through a part-region of a swivel castor according to the invention;
- Fig. 3a: shows a cross section through a magnet assembly in a first alignment;
- Fig. 3b: shows a cross section through a magnet assembly in a second alignment;
- Fig. 4a: shows a first view of a cover plate;
- Fig. 4b: shows a second view of a cover plate;
- Fig. 4c: shows a third view of a cover plate;
- Fig. 5: shows an exploded view of a potential embodiment of a swivel castor according to the invention;
- Fig. 6: shows an exploded view of a further potential embodiment of a swivel castor according to the invention;
- Fig. 7a: shows a view on a swivel castor in the basic alignment;
- Fig. 7b: shows a view on a swivel castor in a first adjusted basic alignment and
- Fig. 7c: shows a view on a swivel castor in a second adjusted basic alignment.

In the various figures of the drawing identical parts are always provided with identical reference signs.

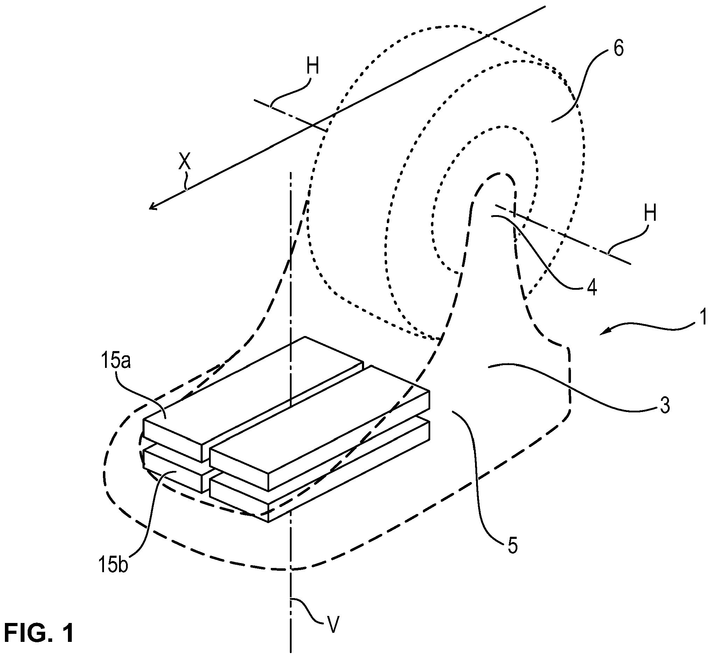

A swivel castor 1 according to the invention is schematically illustrated in Fig. 1. The swivel castor 1 according to the invention comprises a support plate 2 which is rotatably connected to a castor mount 3, for example via a rotary joint, for example in the form of a disc joint. The support plate 2 here may be configured so as to be integral with a container, or be fastened to the latter via connection means. A castor 6 which is movable about a horizontal rotation axis H is fastened to the castor mount 3. The horizontal rotation axis H runs parallel with a plane of extent of the support plate 2. The castor mount 3 in relation to the support plate 2 is rotatable about a rotation axis which forms a quiescent rotation point and which runs in a transverse manner to the horizontal rotation axis H of the castor. The former rotation axis will be referred to as the vertical rotation axis V hereunder, and forms a normal of the plane of extent of the support plate 2. The castor mount 3 in relation to the support plate 2 is preferably configured so as to be rotatable by a full radius, that is to say by 360°, about the vertical rotation axis V.

In particular, both the horizontal as well as the vertical rotation axis V run through the castor mount 3, wherein the castor mount 3 in particular encloses those components which are involved in the event of rotation about the vertical rotation axis V. The castor mount 3 in particular comprises a housing having an axle portion 4 for rotatably fastening the castor 6, and a joint portion 5 in which the castor mount 3 together with the support plate 2 forms a disc joint. The disc joint is preferably configured in an internal region between two arms which connect the joint portion and the axle portion. The internal region is furthermore delimited by a mounting plate 7 which is interdisposed between the castor 6 and the support plate 2, so as to be along the vertical rotation axis V. The mounting plate 7 forms a base area, that is to say the base of the castor mount 3, which is directly involved in the movement in the disc joint.

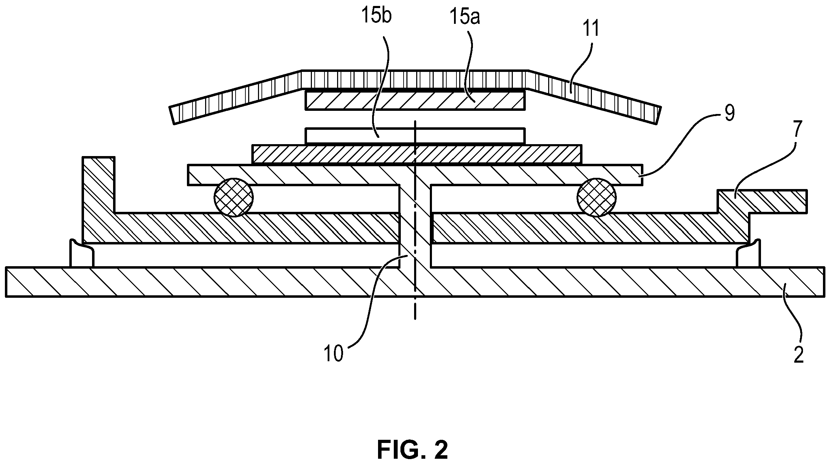

A cross section of components which are enclosed by the joint portion 5 of the castor mount 3 is illustrated in Fig. 2. Here, the mounting plate 7 is interdisposed between a saucer 9 and the support plate 2 and together with the saucer 9 and the support plate 2 forms part of a bearing which enables the castor mount 3 in relation to the support plate 2 to rotate about the vertical rotation axis V. It is possible here, for example, that the saucer 9, the support plate 2, and the mounting plate 7 are part of a ball bearing, as is illustrated in Fig. 2, for example. In the exemplary embodiment the saucer 9 is connected in a non-movable manner to the support plate 2 via a bolt 10 which runs parallel with the vertical rotation axis V and encloses the vertical rotation axis V.

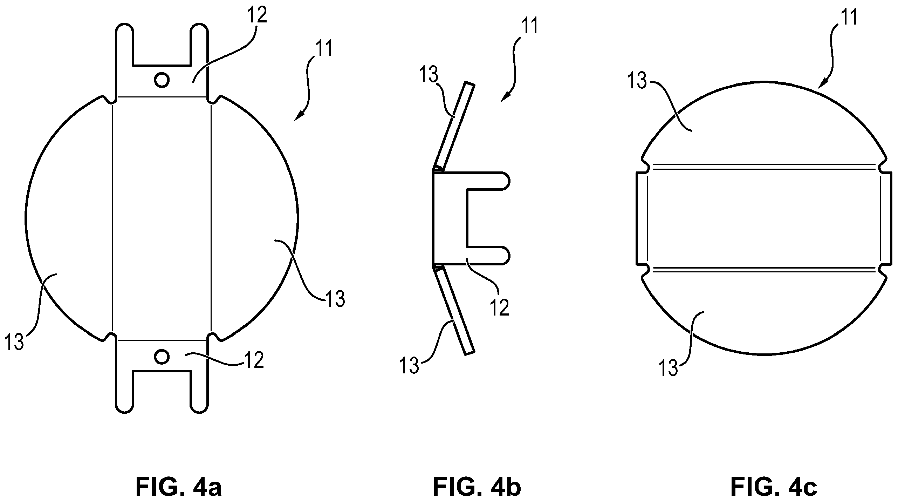

In order for the disc joint to be protected from, for example, soil or moisture, a cover plate 11 is interdisposed between the castor 6 and the saucer 9. One potential embodiment of a cover plate 11 in various views is illustrated in Figs. 4a to 4c. The cover plate 11, together with the mounting plate 7 of the castor mount 3 and with the castor mount 3, encloses an intermediate space. Moreover, the cover plate 11 in particular also has two mutually opposite webs 12 which bear on the mounting plate 7 of the castor mount 3. Preferably, the cover plate 11 on the webs 12 is connected to the castor mount 3 by connection means. In particular, the cover plate 11 additionally has wings 13 which are in each case configured in a crescent shape between the webs 12 and which are bent in the direction towards the intermediate space.

Preferably, the mounting plate 7 as a base area of the castor mount 3 is of round design. In particular, the saucer 9 is also configured so as to be round. Since the castor mount 3 and the saucer 9 (as a part which is fixedly connected to the support plate 2) are rotatable in relation to one another, the castor mount 3 having a round base area and correspondingly adapted internal components may be designed so as to be particularly compact. The support plate 2 may have any shape.

In order for the swivel castor 1 to be automatically aligned, the invention exploits the fact that magnets with non-homonymous magnetic poles attract one another and magnets with homonymous magnetic poles repel one another. The magnets which are poled homonymously or counter-homonymously here will preferably be disposed in the joint region 5 of the castor mount 3 and thus so as to be effectively close to the movable regions.

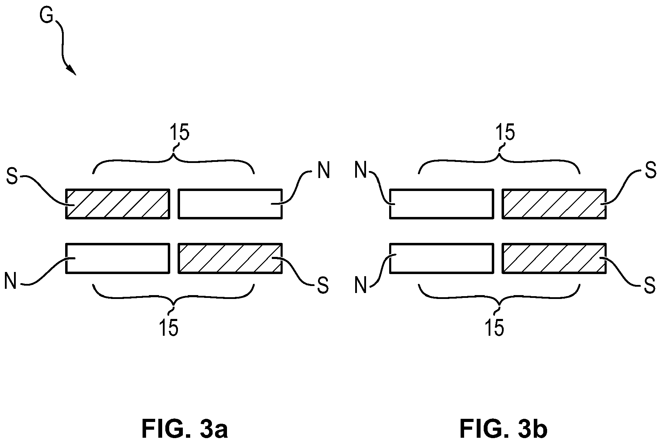

For example, a first double-pole magnet 15a having one north pole N and one south pole S may be provided on the saucer 9. Accordingly, the cover plate 11 of the castor mount 3, lying opposite and parallel with the vertical rotation axis V, could have a second magnet 15b having one north pole N and one south pole S. According to the invention, the magnets 15a, 15b lie so as to be mutually parallel and preferably extend perpendicularly to the vertical rotation axis V. Preferably, the first magnet 15a in basic alignment G of the castor mount 3 along the vertical rotation axis V has a north pole N and a south pole S in contact therewith, and the second magnet 15b adjoins along the vertical rotation axis V of the castor mount 3, having a north pole N and a south pole S in contact therewith. Alternatively, the first magnet 15a along the vertical rotation axis V may have a south pole S and a north pole N in contact therewith, and the second magnet 15b may adjoin along the vertical rotation axis V, having a south pole S and a north pole N in contact therewith. One potential assembly for magnets 15a, 15b in basic alignment G is shown in Fig. 3a.

In basic alignment G the north pole N of the magnet 15b of the saucer 9 attracts the south pole S of the magnet 15a of the cover plate 11, and the south pole S of the magnet 15b of the saucer 9, which lies next to the north pole N of the magnet 15b of the saucer 9, attracts the north pole N of the magnet 15a of the cover plate 11, which lies next to the south pole S of the magnet 15a on the cover plate 11. When the swivel castor 1 is moved out of basic alignment G, the magnetic fields of homonymous magnetic poles mutually overlap, so that the magnetic poles repel one another. In this way, the swivel castor 1 in relation to the support plate 2 always swings back to a single basic alignment G. In this basic alignment the castor 6 by way of its running surface is aligned in a specific alignment X. The swivel castor 1 here preferably swings in when the container having the swivel castor 1 is lifted and the swivel castor 1 consequently is free to move in the air.

In one potential embodiment of the invention, which is based on the principle which has been described above, a magnet 15b which has a north pole N and a south pole S is disposed on that side of the saucer 9 that faces the internal region of the castor mount 3. A magnet 15a which is attached to the cover plate 11 of the castor mount 3 lies opposite the magnet 15b of the saucer 9 of the support plate 2, so as to be parallel with the vertical rotation axis V. In particular, in basic alignment G of the swivel castor 1, in each case non-homonymous magnetic poles of the saucer 9 and of the castor mount 3 lie so as to be mutually opposite and parallel with the vertical rotation axis V. On account thereof it is achieved that the swivel castor 1 assumes a specific alignment, that is to say the basic alignment G.

In particular, the magnets 15a, 15b are disposed and configured in such a manner that in basic alignment G they attract one another at maximum fore and following rotation, in particular by 180° in a common plane, repel one another at maximum force. Alignment of the magnets 15a, 15b following rotation by 180° is schematically illustrated in Fig. 3b. It may be advantageous here for each magnet 15a, 15b to have in each case two part-magnets. In particular, here a part-magnet of the first magnet 15a in basic alignment G along the vertical rotation axis V has a north pole N and a south pole S in contact therewith, adjoined along the vertical rotation axis V by a part-magnet of the second magnet 15b having a north pole N and a south pole S in contact therewith. Alternatively, a part-magnet of the first magnet 15a along the vertical rotation axis V has a south pole S and north pole N in contact therewith, adjoined along the vertical rotation axis V by a part-magnet of the second magnet 15b having a south pole S and a north pole N in contact therewith.

The part-magnets preferably form component parts of the magnets 15a, 15b, wherein at least in each case two part-magnets form a magnet 15a, 15b. Preferably, the two part-magnets of a magnet 15a, 15b are dissimilar magnetic poles. This means that each magnet is in each case formed from two part-magnets, wherein one part-magnet in relation to the other part-magnet is disposed so as to be rotationally offset by 180° about an axis which is perpendicular to the vertical rotation axis V.

Preferably, the magnets 15a, 15b and/or the part-magnets are disposed about the vertical rotation axis V so as to be point-symmetrical and/or mirror-symmetrical. In order for a torque to be configured about the vertical rotation axis V it may be advantageous for the part-magnets to be configured about the vertical rotation axis V so as to be asymmetrical. For example, the magnets 15a, 15b at the upper side thereof which in each case faces the other magnet 15a, 15b may be configured so as to be rectangular. Here, the part-magnets in a transverse manner to the vertical rotation axis V may have side lengths in such a manner that the latter, when placed against one another so as to be transverse to the vertical rotation axis V, form a cuboid having a square base area which extends in a transverse manner to the vertical rotation axis V. One exemplary embodiment of an arrangement of this type is illustrated in Fig. 1.

In particular, the two webs 12 which are disposed on the peripheries of the cover plate 11 bear on the mounting plate 7 of the castor mount 3, so as to expose the gap between the two magnets. Since the attraction force of a magnet 15a, 15b depends on the spacing from the magnet 15a, 15b, the degree of damping when swinging into the basic alignment G may be set by the configuration of the webs 12. The magnets 15a, 15b may comprise iron and/or nickel and/or neodymium.

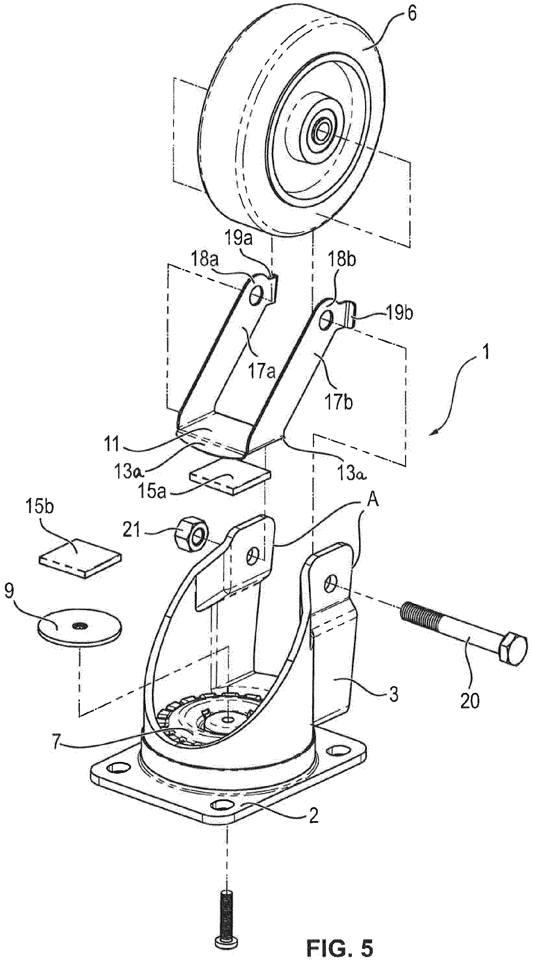

As an alternative to the webs 12, the cover plate 11 is provided with two legs 17a, 17b via which the cover plate 11 is connected to the castor mount 3 in such a manner that the cover plate 11 is held in particular so as to be non-movable on the castor mount 3. A corresponding embodiment of the swivel castor 1 is illustrated in Fig. 5. The two legs 17a, 17b extend in the direction towards the horizontal rotation axis H of the castor 6 and by way of the free end 18a, 18b thereof which is remote from the cover plate 11 are in each case connected to the castor mount 3. The cover plate 11 and the legs 17a, 17b are preferably configured so as to be integral. In particular, the legs 17a, 17b run in a mutually parallel manner.

In particular, the cover plate 11 by their legs 17a, 17b, at the free ends 18a, 18b thereof which are remote from the former, together with the castor 6 is connected to the castor mount 3 via a common connection means. For example, the legs 17a, 17b of the cover plate 11, by way of the free ends 18a, 18b thereof, may extend into an intermediate space between the castor 6, in the region of the rotation axis H thereof, and the castor mount 3. In the region of the horizontal rotation axis H, on the free ends 18a, 18b of the legs 17a, 17b and on the castor mount 3, there are then, for example, clearances through which the connection means runs along the horizontal rotation axis H of the castor 6 from the castor mount 3 through a respective free end 18a, 18b of the legs 17a, 17b, and through the castor 6. Particularly preferably, the connection means forms an axle for the castor 6 and is preferably configured in the form of a screw 20 which is secured by a fastening means, for example a nut 21, against displacement in the castor mount 3 along the horizontal rotation axis H. The cover plate 11 via this exemplary connection means is connected to the castor mount 3 so as to be rotatable in relation to the horizontal rotation axis H.

In addition to the connection means, the legs 17a, 17b are in particular connected to the castor mount 3 via a securing means so as to be rotationally fixed in relation to the horizontal rotation axis H. For example, the free ends 18a, 18b of the legs 17a, 17b may in each case be connected to a lug 19a, 19b which is bent away at least at a right angle from the respective free end 18a, 18b of the legs 17a, 17b, wherein the respective lug 19a, 19b runs so as to be tangential to the horizontal rotation axis H of the castor 6 and points away from the castor 6. Preferably, the contact side A of the castor mount 3 extends so as to be tangential to the horizontal rotation axis H in the same direction as the respective lug 19a, 19b which is placed against the contact side A. There is thus a form-fit by virtue of contact between the lugs 19a, 19b and the contact sides A of the castor mount 3, so that the cover plate 11 cannot be rotated about the horizontal rotation axis H of the castors 6.

In particular, the first magnet 15a is moved relative to the second magnet 15b in guiding means of the cover plate 11 and can be fastened immovably to the cover plate 11 by fastening means 26 of the guiding means. According to a preferred embodiment, the first magnet 15a, being connected to the cover plate 11, can be rotated about the vertical axis V.

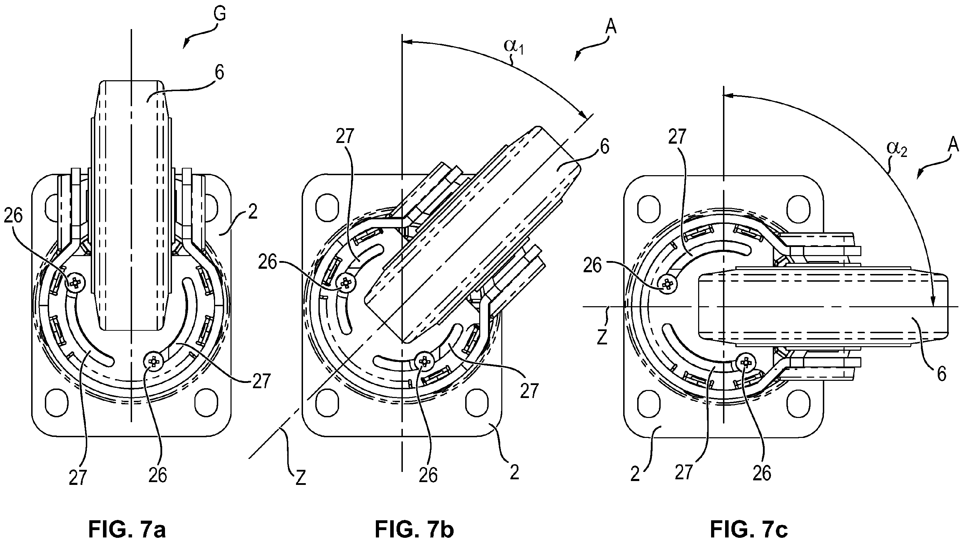

The guiding means of the cover plate 11 allow the castor 6 to have an adjusted basic alignment A which can be modified flexibly. The adjusted basic alignment A is set by releasing the first magnet 15a from the cover plate 11, rotating the magnet 15a about the vertical axis V in a range which is predefined by the guiding means and fastening the first magnet 15a immovably to the cover plate 11 by the fastening means 26 of the guiding means. According to exemplary embodiments, which are shown in the Figures 7a to 7c, the adjusted basic alignment A can be set in a range from 0 to 90 degrees relative to the basic alignment G. E. g., Fig. 7a shows the castor 6 being in the basic alignment G so that the adjusted basic alignment A corresponds to the basic alignment G. Furthermore, Fig. 7b shows the castor 6 being in an adjusted basic alignment A with an angle of α1=45 degrees relative to the basic alignment G and Fig. 7c shows the castor 6 being in an adjusted basic alignment A with an angle of α2=90 degrees relative to the basic alignment G. An adjusted basic alignment A allows the swivel castor 1 of a transport container, to which the swivel castor 1 is attached, to be included in a clearance of another container being directed arbitrarily.

Particularly, the first magnet 15a is held in a holder 25, where the holder 25 is guided in the guiding means of the cover plate 11. Preferably, the holder 25 is connected to the guiding means in at least two sections. According to the most preferred embodiment, the holder 25 is held in just two sections in the guiding means of the cover plate 11. Preferably, the holder 25 fixes the first magnet 15a in a form fitting manner against movements along the vertical axis V. Especially, it fixes the first magnet 15a against movements in the direction of the second magnet 15b.

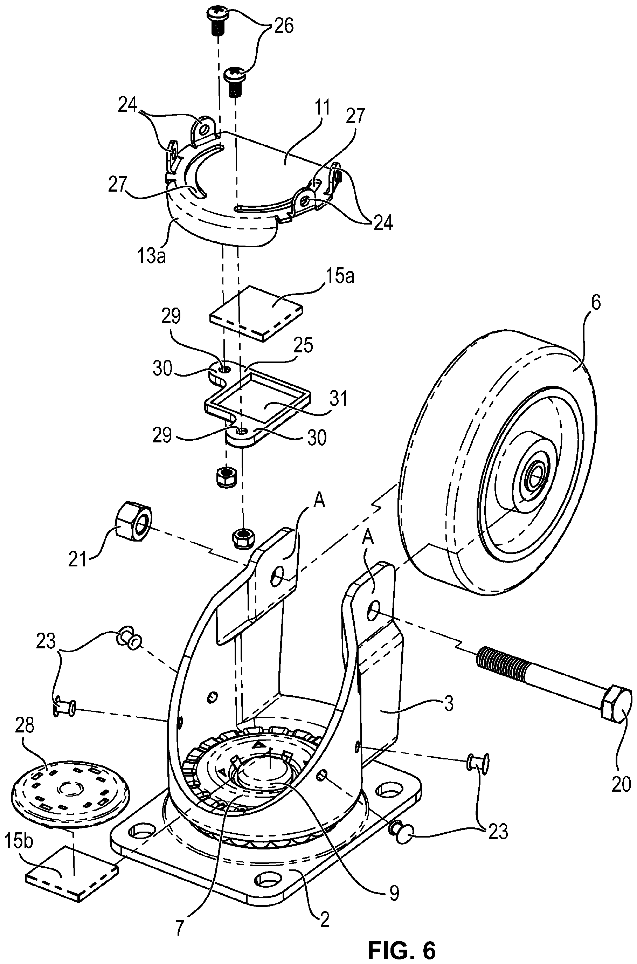

According to a possible embodiment of the holder 25, which is shown in Figure 6, the holder 25 consists of a container 31 which includes the first magnet 15a. In the circumference of the vertical axis V, the container 31 has two extensions 30 which each have an aperture 29 extending parallel to the vertical axis V through each extension 30. The holder 25 is connected to the guiding means by the fastening means 26, such as screws, which extend through the guiding means of the cover plate 11 and the apertures 29. If necessary, the fastening means 26 can be secured. E. g., if the fastening means 26 are screws, they can be secured by nuts which are mounted on the screws so that they abut against the holder 25. If the nuts are released, the holder can be moved about the vertical axis V. If the nuts are tightened, the holder 25 is connected immovably to the cover plate 11.

The guiding means are, according to a possible embodiment, slots 27 which extend within the cover plate 11 along a circumferential circle of the vertical axis V. Preferably, the guiding means comprise two slots 27 which extend along the circumferental circle of the vertical axis V about a length which corresponds to an angle from 60 to 130 degrees of the circumferential circle of the vertical axis V. In particular, the slots 27 are arranged in mirror symmetry relative to a central axis Z extending centrically in the direction of the wheel tread of the castor 6 in the basic alignment G. For example, as shown in Figure 7b, each slot 30 extends about a length along the circumferental circle of the vertical axis V which corresponds to an angle of about 90 degrees.

The interior between the cover plate 11 and the saucer 9, which includes the two magnets 15a, 15b, is preferably protected by a fold 13a, which points towards the second magnet 15b. Furthermore, the second magnet 15b particularly is completely covered by a spacer 28 which is formed like a disc. The spacer 28 provides space between the first magnet 15a and the second magnet 15b so that the first magnet 15a is not magnetically attached to the second magnet 15b when the first magnet 15a is moved relative to the second magnet 15b in the guiding means of the cover plate 11. Additionally, the second magnet 15a is protected by the spacer 28. Preferably, the spacer 28 is made of plastic. It can have several openings which are placed on a circumferential circle of the vertical axis V in the spacer 28.

As shown in Figure 6, the cover plate 11 can be mounted in the castor mount 3, e. g. by screws or rivets 23 which extend through straps of the cover plate 11 and through openings of the castor mount.

According to the invention, a stop for the swivel castor 1 is furthermore provided. The castor mount may here be connected to the stop, for example. The stop comprises a blocking element which in a blocked position interacts in a form-fitting and/or force-fitting manner with a castor 6 and with the disc joint which connects the castor mount 3 and the support plate 2 so as to be rotatable about the vertical rotation axis V, and in an unblocked position releases the castor 6 and the disc joint. In particular, the stop is configured in a tripartite manner and comprises a cap which is moulded on the castor mount and extends along a part-region of the castor running wheel which corresponds to a part-radius of the castor 6, and furthermore comprises a lever which is guided in a cap clearance, and the movable blocking element which is connected to the lever and which is configured as an elastic angular piece. The angular piece is thus actuatable by way of the lever.

In particular, the elastic angular piece extends along the cap. The angular piece in the blocked position between a tilting axis of the actuating lever and the actuating lever is preferably jammed in such a manner that said angular piece, on the one hand, interacts in a force-fitting and/or form-fitting manner with the mounting plate of the castor mount 6 and, on the other hand, interacts in a form-fitting and/or force-fitting manner with the castor 6. The tilting axis may be formed by a pin which connected to the cap, for example, wherein the tilting axis extends so as to be transverse to a line of movement of the running surface. In particular, the angular piece has an elastic finger which in the blocked position by way of a rectangular finger tip pushes onto the running surface of the castor. A lug which engages in a clearance of the lever is configured so as to be opposite the finger tip at the end side of an extension of the finger. The lever and the lug in this way form an articulation joint.

Furthermore preferably, the cover plate 11 is configured in such a manner that the latter exposes a region of the mounting plate 7 which in the blocked position interacts with the stop in a force-fitting manner.

### List of reference signs

- 1: Swivel castor
- 2: Support plate
- 3: Castor mount
- 4: Axle portion
- 5: Joint portion
- 6: Castor
- 7: Mounting plate
- 9: Saucer
- 10: Bolt
- 11: Cover plate
- 12: Web
- 13: Wing
- 13a: Fold
- 15a, 15b: Magnet
- 17a, 17b: Leg
- 18a, 18b: Free ends of legs
- 19a, 19b: Lug
- 20: Screw
- 21: Nut
- 23: Rivet
- 24: Strap
- 25: Holder
- 26: Fastening means
- 27: Slot
- 28: Spacer
- 29: Aperture
- 30: Extension
- 31: Container of the holder

- A: Adjusted basic alignment
- G: Basic alignment
- H: Horizontal rotation axis
- N: North pole
- V: Vertical rotation axis
- S: South pole
- X: Castor alignment in basic alignment
- Z: Central axis

- α1: Angle
- α2: Angle

## Claims

1. Swivel castor (1) comprising a support plate (2) for connection to a container, and furthermore comprising a castor mount (3) having a castor (6) which is rotatable about a horizontal rotation axis (H), wherein the castor mount (3) is connected to the support plate (2) so as to be rotatable about a vertical rotation axis (V), wherein at least one first magnet (15a) is connected to the castor mount (3) and at least one second magnet (15b) is connected to the support plate (2), wherein the magnets (15a, 15b) are magnetized and disposed so as to be mutually parallel including a gap in such a manner that in an alignment of the castor mount outside a defined basic alignment (G) of the castor mount (3) the magnets (15a, 15b) interact in such a manner that the castor mount (3) swings into basic alignment (G), wherein the support plate (2) is connected to a saucer (9), and a mounting plate (7) forms a base area of the castor mount (3), **characterized in that** the mounting plate (7) is rotatably mounted between the saucer (9) and the support plate (2), wherein the castor mount (3) has a cover plate (11) which collectively with the saucer (9) of the support plate (2) and collectively with the mounting plate (7) encloses an intermediate space for the magnets (15a, 15b).

2. Swivel castor (1) according to Claim 1, **characterized in that** the magnets (15a, 15b) are disposed in relation to one another and configured in such a manner that said magnets in the basic alignment (G) of the castor mount (3) in the vertical rotation axis (V) attract one another at maximum force and following rotation, in particular by 180° in a common plane, repel one another at maximum force.

3. Swivel castor (1) according to one of Claims 1 or 2, **characterized in that** the magnets (15a, 15b) extend so as to be perpendicular to the vertical rotation axis (V) of the castor mount (3).

4. Swivel castor (1) according to one of Claims 1 to 3, **characterized in that** in basic alignment (G) of the castor mount (3) the first magnet (15a) on that side thereof that faces the second magnet (15b) and extends so as to be transverse to the vertical rotation axis (V) of the castor mount (3) has a north pole (N) and a south pole (S) in contact therewith, and the second magnet (15b) on that face thereof that faces the first magnet (15a) and extends so as to be transverse to the vertical rotation axis (V) has a north pole (N), which is parallel with the vertical rotation axis (V) and opposite to the south pole (S) of the first magnet (15a), and a south pole (S) which is parallel with the vertical rotation axis (V) and opposite the north pole (N) of the first magnet (15a).

5. Swivel castor (1) according to one of Claims 1 to 4, **characterized in that** each magnet (15a, 15b) is formed from in each case two part-magnets which are disposed beside one another so as to be perpendicular to the vertical rotation axis (V), wherein the disposal of the north pole (N) and of the south pole (S) of the part-magnets extends in the direction of the vertical rotation axis (V), and that a part-magnet in relation to the other part-magnet is disposed so as to be rotationally offset by 180° about an axis which is perpendicular to the vertical rotation axis (V).

6. Swivel castor (1) according to one of Claims 1 to 5, **characterized in that** the magnets (15a, 15b) and/or part-magnets are disposed about the vertical rotation axis (V) so as to be point-symmetrical and/or mirror-symmetrical.

7. Swivel castor (1) according to Claim 1, **characterized in that** the first magnet (15a) is disposed on a side of the cover plate (11) that faces the intermediate space, and the second magnet (15b) is disposed on a side of the saucer (9) of the support plate (2) that faces the intermediate space.

8. Swivel castor (1) according to one of Claims 1 or 7, **characterized in that** the cover plate (11) on the periphery by way of two mutually opposite webs (12) bears on the mounting plate (7) of the castor mount (3) .

9. Swivel castor (1) according to one of Claims 1 or 7, **characterized in that** the cover plate (11) has two legs (17a, 17b) which extend in the direction of the horizontal rotation axis (H) of the castor (6), wherein each leg (17a, 17b) in each case at that free end (18a, 18b) thereof that is remote from the cover plate (11) is connected to the castor mount (3) via connection means.

10. Swivel castor (1) according to Claim 9, **characterized in that** the legs (17a, 17b) are configured so as to be integral with the cover plate (11).

11. Swivel castor (1) according to one of Claims 9 or 10, **characterized in that** the legs (17a, 17b), by way of the free ends (18a, 18b) thereof which are remote from the cover plate (11), and the castors (6) are connected to the castor mount (3) via a common connection means.

12. Swivel castor (1) according to one of Claims 9 to 11, **characterized in that** the connection means forms an axle of the castor (6), and the legs (17a, 17b) are additionally connected to the castor mount (3) via a securing means so as to be rotationally fixed in relation to the horizontal rotation axis (H).

13. Swivel castor (1) according to one of Claims 1, or to 7 to 12, **characterized in that** the first magnet (15a) is mounted movably in guiding means of the cover plate (11), the guiding means having fastening means (26) which hold the first magnet (15a) movably relative to the second magnet (15b), and the first magnet (15a) is fixable by the fastening means (26) to the cover plate (11).

14. Swivel castor (1) according Claim 13, **characterized in that** the first magnet (15a) is mounted movably in the guiding means of the cover plate (11) and can be moved in the circumferenctial direction of the vertical axis (V).

15. Swivel castor (1) according to one of the Claims 13 or 14, **characterized in that** a holder (25) includes the first magnet (15a) in a form fitting manner and the holder (25) is connected in at least two sections to the guiding means of the cover plate (11).

16. Swivel castor (1) according to one of the Claims 13 to 15, **characterized in that** the guiding means are two slots (27) which extend within the cover plate (11) along a section of a circumferential circle of the vertical axis (V).

17. Swivel castor (1) according to one of the Claims 1, or 7 to 16, **characterized in that** the cover plate (11) in each case between the webs (12) has wings (13) or a fold (13a) which are/is, in particular configured in the shape of a crescent and, which are/is bent in the direction towards the intermediate space.

18. Swivel castor (1) according to one of Claims 1 to 13, **characterized by** a stop which is connected to the castor mount (3) and in a blocked position interacts in a form-fitting and/or force-fitting manner with the castor (6) and with a rotary joint which connects the castor mount (3) and the support plate (2) so as to be rotatable about the vertical rotation axis (V), and in an unblocked position releases the castor (6) and the disc joint.

19. Swivel castor (1) according to Claim 14, **characterized in that** the cover plate (11) is configured in such a manner that the latter exposes a region of the mounting plate (7), which in the blocked position interacts with the stop in a force-fitting manner.

## Patentansprüche

1. Lenkrolle (1), umfassend eine Trägerplatte (2) zur Verbindung mit einem Behälter und weiterhin umfassend einen Rollenhalter (3) mit einer um eine horizontale Drehachse (H) drehbaren Rolle (6), wobei der Rollenhalter (3) mit der Trägerplatte (2) um eine vertikale Drehachse (V) verdrehbar verbunden ist, wobei
zumindest ein erster Magnet (15a) mit dem Rollenhalter (3) und zumindest ein zweiter Magnet (15b) mit der Trägerplatte (2) verbunden ist, wobei die Magneten (15a, 15b) derart magnetisiert und mit einem Luftspalt parallel zueinander angeordnet sind, dass in einer Ausrichtung des Rollenhalters außerhalb einer definierten Grundausrichtung (G) des Rollenhalters (3) die Magneten (15a, 15b) derart zusammenwirken, dass der Rollenhalter (3) in die Grundausrichtung (G) einschwingt, wobei die Trägerplatte (2) mit einem Teller (9) verbunden ist, und eine Lagerplatte (7) eine Grundfläche des Rollenhalters (3) bildet,
**dadurch gekennzeichnet, dass** die Lagerplatte (7) zwischen dem Teller (9) und der Trägerplatte (2) drehbar gelagert ist, wobei der Rollenhalter (3) eine Abdeckplatte (11) aufweist, die gemeinsam mit dem Teller (9) der Trägerplatte (2) und gemeinsam mit der Lagerplatte (7) einen Zwischenraum für die Magneten (15a, 15b) einschließt.

2. Lenkrolle (1) nach Anspruch 1,
**dadurch gekennzeichnet, dass** die Magneten (15a, 15b) derart zueinander angeordnet und ausgebildet sind, dass sie sich in der Grundausrichtung (G) des Rollenhalters (3) an der vertikalen Drehachse (V) mit einer maximalen Kraft anziehen und nach einer Drehung, um insbesondere 180° in einer gemeinsamen Ebene, mit einer maximalen Kraft abstoßen.

3. Lenkrolle (1) nach einem der Ansprüche 1 oder 2,
**dadurch gekennzeichnet, dass** die Magneten (15a, 15b) sich senkrecht zur vertikalen Drehachse (V) des Rollenhalters (3) erstrecken.

4. Lenkrolle (1) nach einem der Ansprüche 1 bis 3,
**dadurch gekennzeichnet, dass** in der Grundausrichtung (G) des Rollenhalters (3) der erste Magnet (15a) auf seiner dem zweiten Magneten (15b) zugewandten, quer zur vertikalen Drehachse (V) des Rollenhalters (3) erstreckenden Seite einen Nordpol (N) und einen hieran anliegenden Südpol (S) aufweist, und der zweite Magnet (15b) auf seiner dem ersten Magneten (15a) zugewandten, quer zur vertikalen Drehachse (V) erstreckenden Fläche einen dem Südpol (S) des ersten Magneten (15a) parallel zur vertikalen Drehachse (V) gegenüberliegenden Nordpol (N) und einen dem Nordpol (N) des ersten Magneten (15a) parallel zur vertikalen Drehachse (V) gegenüberliegenden Südpol (S) aufweist.

5. Lenkrolle (1) nach einem der Ansprüche 1 bis 4,
**dadurch gekennzeichnet, dass** jeder Magnet (15a, 15b) aus jeweils zwei senkrecht zur vertikalen Drehachse (V) nebeneinander angeordneten Teilmagneten gebildet ist, wobei sich die Anordnung des Nordpols (N) und des Südpols (S) der Teilmagneten in Richtung der vertikalen Drehachse (V) erstreckt, und ein Teilmagnet um 180° um eine Achse senkrecht zur vertikalen Drehachse (V) zu dem anderen Teilmagneten verdreht angeordnet ist.

6. Lenkrolle (1) nach einem der Ansprüche 1 bis 5,
**dadurch gekennzeichnet, dass** die Magneten (15a, 15b) und/oder Teilmagneten um die vertikale Drehachse (V) punktsymmetrisch und/oder spiegelsymmetrisch angeordnet sind.

7. Lenkrolle (1) nach Anspruch 1,
**dadurch gekennzeichnet, dass** der erste Magnet (15a) auf einer dem Zwischenraum zugewandten Seite der Abdeckplatte (11) und der zweite Magnet (15b) auf einer dem Zwischenraum zugewandten Seite des Tellers (9) der Trägerplatte (2) angeordnet ist.

8. Lenkrolle (1) nach einem der Ansprüche 1 oder 7,
**dadurch gekennzeichnet, dass** die Abdeckplatte (11) randseitig mit zwei sich gegenüberliegenden Stegen (12) auf der Lagerplatte (7) des Rollenhalters (3) aufliegt.

9. Lenkrolle (1) nach einem der Ansprüche 1 oder 7,
**dadurch gekennzeichnet, dass** die Abdeckplatte (11) zwei in Richtung auf die horizontale Drehachse (H) der Rolle (6) erstreckende Schenkel (17a, 17b) aufweist, wobei jeder Schenkel (17a, 17b) jeweils an seinem der Abdeckplatte (11) fernliegenden, freien Ende (18a, 18b) mit dem Rollenhalter (3) über Verbindungsmittel verbunden ist.

10. Lenkrolle (1) nach Anspruch 9,
**dadurch gekennzeichnet, dass** die Schenkel (17a, 17b) einstückig mit der Abdeckplatte (11) ausgebildet sind.

11. Lenkrolle (1) nach einem der Ansprüche 9 oder 10,
**dadurch gekennzeichnet, dass** die Schenkel (17a, 17b) mit ihren der Abdeckplatte (11) fernliegenden, freien Enden (18a, 18b) und die Rollen (6) über ein gemeinsames Verbindungsmittel mit dem Rollenhalter (3) verbunden sind.

12. Lenkrolle (1) nach einem der Ansprüche 9 bis 11,
**dadurch gekennzeichnet, dass** das Verbindungsmittel eine Achse der Rolle (6) bildet und die Schenkel (17a, 17b) zusätzlich über ein Sicherungsmittel drehfest bezüglich der horizontalen Drehachse (H) mit dem Rollenhalter (3) verbunden sind.

13. Lenkrolle (1) nach einem der Ansprüche 1 oder 7 bis 12,
**dadurch gekennzeichnet, dass** der erste Magnet (15a) beweglich in Führungsmitteln der Abdeckplatte (11) gelagert ist, wobei die Führungsmittel Befestigungsmittel (26) aufweisen, die den ersten Magneten (15a) relativ zum zweiten Magneten (15b) beweglich halten, und der erste Magnet (15a) durch die Befestigungsmittel (26) mit der Abdeckplatte (11) verbindbar ist.

14. Lenkrolle (1) nach Anspruch 13,
**dadurch gekennzeichnet, dass** der erste Magnet (15a) beweglich in den Führungsmitteln der Abdeckplatte (11) gelagert ist und in Umfangsrichtung der vertikalen Achse (V) bewegt werden kann.

15. Lenkrolle (1) nach einem der Ansprüche 13 oder 14,
**dadurch gekennzeichnet, dass** ein Halter (25) den ersten Magneten (15a) formschlüssig umgibt und der Halter (25) in mindestens zwei Abschnitten mit den Führungsmitteln der Abdeckplatte (11) verbunden ist.

16. Lenkrolle (1) nach einem der Ansprüche 13 bis 15,
**dadurch gekennzeichnet, dass** die Führungsmittel zwei Schlitze (27) sind, die sich in der Abdeckplatte (11) entlang eines Abschnitts eines Umfangskreises der vertikalen Achse (V) erstrecken.

17. Lenkrolle (1) nach einem der Ansprüche 1 oder 7 bis 16,
**dadurch gekennzeichnet, dass** die Abdeckplatte (11) jeweils zwischen den Stegen (12) insbesondere halbmondförmig ausgebildete Flügel (13) oder eine Faltung (13a) aufweist, die in Richtung auf den Zwischenraum gebogen sind/ist.

18. Lenkrolle (1) nach einem der Ansprüche 1 bis 13, **gekennzeichnet durch** einen Stopper, der mit dem Rollenhalter (3) verbunden ist und in einer Feststellung mit der Rolle (6) und mit einem den Rollenhalter (3) und die Trägerplatte (2) drehbeweglich um die vertikale Drehachse (V) verbindenden Drehgelenk formschlüssig und/oder kraftschlüssig zusammenwirkt und in einer Lösestellung die Rolle (6) und das Scheibengelenk freigibt.

19. Lenkrolle (1) nach Anspruch 14,
**dadurch gekennzeichnet, dass** die Abdeckplatte (11) derart ausgebildet ist, dass sie einen Bereich der Lagerplatte (7) freigibt, der in der Feststellung mit dem Stopper kraftschlüssig zusammenwirkt.

## Revendications

1. Roulette pivotante (1) comprenant une plaque support (2) pour la raccorder à un conteneur et comprenant en outre une monture (3) de roulette comportant une roulette (6) qui peut tourner autour d'un axe de rotation (H) horizontal, dans laquelle la monture (3) de roulette est raccordée à la plaque support (2) de façon à pouvoir tourner autour d'un axe de rotation (V) vertical, dans laquelle au moins un premier aimant (15a) est raccordé à la monture (3) de roulette et au moins un second aimant (15b) est raccordé à la plaque support (2), dans laquelle les aimants (15a, 15b) sont magnétisés et disposés de façon à être parallèles l'un à l'autre en comprenant un interstice de telle manière que, dans un alignement de la monture de roulette hors d'un alignement de base (G) défini de la monture (3) de roulette, les aimants (15a, 15b) interagissent de telle manière que la monture (3) de roulette se balance dans un alignement de base (G), dans laquelle la plaque support (2) est raccordée à une écuelle (9), et une sellette (7) constitue la zone de base de la monture (3) de roulette, **caractérisée en ce que** la sellette (7) est montée rotative entre l'écuelle (9) et la plaque support (2), dans laquelle la monture (3) de roulette comporte une plaque de couverture (11) qui, collectivement avec l'écuelle (9) de la plaque support (2) et, collectivement avec la sellette (7) entoure un espace intermédiaire pour les aimants (15a, 15b) .

2. Roulette pivotante (1) selon la revendication 1, **caractérisée en ce que** les aimants (15a, 15b) sont disposés l'un par rapport à l'autre et configurés de telle manière que lesdits aimants dans l'alignement de base (G) de la monture (3) de roulette dans l'axe de rotation (V) vertical s'attirent l'un l'autre à une force maximale et, suite à une rotation, en particulier à 180° dans un plan commun, se repoussent l'un l'autre à la force maximale.

3. Roulette pivotante (1) selon la revendication 1 ou 2, **caractérisée en ce que** les aimants (15a, 15b) s'étendent de façon à être perpendiculaires à l'axe de rotation (V) vertical de la monture (3) de roulette.

4. Roulette pivotante (1) selon l'une quelconque des revendications 1 à 3, **caractérisée en ce que** dans un alignement de base (G) de la monture (3) de roulette, le premier aimant (15a) sur le côté de celle-là qui est en face du second aimant (15b) et s'étend de façon à être perpendiculaire à l'axe de rotation (V) vertical de la monture (3) de roulette comporte un pôle nord (N) et un pôle sud (S) en contact avec celui-ci, et le second aimant (15b) sur la face de celle-là qui est en face du premier aimant (15a) et s'étend de façon à être perpendiculaire à l'axe de rotation (V) vertical comporte un pôle nord (N), qui est parallèle à l'axe de rotation (V) et à l'opposé du pôle sud (S) du premier aimant (15a), et un pôle sud (S) qui est parallèle à l'axe de rotation (V) vertical et à l'opposé du pôle nord (N) du premier aimant (15a).

5. Roulette pivotante (1) selon l'une quelconque des revendications 1 à 4, **caractérisée en ce que** chaque aimant (15a, 15b) est constitué dans chaque cas à partir de deux aimants partiels disposés à côté l'un de l'autre de façon à être perpendiculaires à l'axe de rotation (V) vertical, dans laquelle la disposition du pôle nord (N) et du pôle sud (S) des aimants partiels s'étend dans la direction de l'axe de rotation (V) vertical, et **en ce qu'**un aimant partiel par rapport à l'autre aimant partiel est disposé de façon à être décalé en rotation de 180° autour d'un axe qui est perpendiculaire à l'axe de rotation (V) vertical.

6. Roulette pivotante (1) selon l'une quelconque des revendications 1 à 5, **caractérisée en ce que** les aimants (15a, 15b) et/ou les aimants partiels sont disposés autour de l'axe de rotation (V) vertical de façon à ce qu'on passe de l'un à l'autre par symétrie centrale et/ou par symétrie miroir.

7. Roulette pivotante (1) selon la revendication 1, **caractérisée en ce que** le premier aimant (15a) est disposé sur un côté de la plaque de couverture (11) qui est tourné vers l'espace intermédiaire, et le second aimant (15b) est disposé sur un côté de l'écuelle (9) de la plaque support (2) qui est tourné vers l'espace intermédiaire.

8. Roulette pivotante (1) selon la revendication 1 ou 7, **caractérisée en ce que** la plaque de couverture (11) sur la périphérie au moyen de deux toiles (12) en face l'une de l'autre s'appuie sur la sellette (7) de la monture (3) de roulette.

9. Roulette pivotante (1) selon la revendication 1 ou 7, **caractérisée en ce que** la plaque de couverture (11) comporte deux pattes (17a, 17b) qui s'étendent dans la direction de l'axe de rotation (H) horizontal de la roulette (6), dans laquelle chaque patte (17a, 17b) est dans chaque cas, à l'extrémité libre (18a, 18b) de celle-ci qui est éloignée de la plaque de couverture (11), raccordée à la monture (3) de roulette par le biais de moyens de raccordement.

10. Roulette pivotante (1) selon la revendication 9, **caractérisée en ce que** les pattes (17a, 17b) sont configurées de façon à faire partie intégrante de la plaque de couverture (11).

11. Roulette pivotante (1) selon la revendication 9 ou 10, **caractérisée en ce que** les pattes (17a, 17b), au moyen de leurs extrémités libres (18a, 18b) qui est éloignées de la plaque de couverture (11), et les roulettes (6) sont raccordées à la monture (3) de roulette par le biais d'un moyen de raccordement commun.

12. Roulette pivotante (1) selon l'une quelconque des revendications 9 à 11, **caractérisée en ce que** le moyen de connexion constitue un axe pour la roulette (6) et les pattes (17a, 17b) sont en plus raccordées à la monture (3) de roulette par le biais d'un moyen de fixation de façon à être fixes en rotation par rapport à l'axe de rotation (H) horizontal.

13. Roulette pivotante (1) selon l'une quelconque des revendications 1 ou 7 à 12, **caractérisée en ce que** le premier aimant (15a) est monté mobile dans des moyens de guidage de la plaque de couverture (11), les moyens de guidage comportant des moyens de fixation (26) qui maintiennent le premier aimant (15a) mobile par rapport au second aimant (15b), et le premier aimant (15a) peut être fixé par les moyens de fixation (26) à la plaque de couverture (11).

14. Roulette pivotante (1) selon la revendication 13, **caractérisée en ce que** le premier aimant (15a) est monté mobile dans les moyens de guidage de la plaque de couverture (11) et peut être déplacé dans la direction de la circonférence de l'axe vertical (V).

15. Roulette pivotante (1) selon la revendication 13 ou 14, **caractérisée en ce qu'**un support (25) contient le premier aimant (15a) d'une manière ajustée et le support (25) est raccordé dans au moins deux sections aux moyens de guidage de la plaque de couverture (11).

16. Roulette pivotante (1) selon l'une quelconque des revendications 13 à 15, **caractérisée en ce que** les moyens de guidage sont deux fentes (27) qui s'étendent à l'intérieur de la plaque de couverture (11) le long d'un secteur d'un cercle de circonférence de l'axe vertical (V).

17. Roulette pivotante (1) selon l'une quelconque des revendications 1 ou 7 à 16, **caractérisée en ce que** la plaque de couverture (11) comporte dans chaque cas entre les toiles (12) des ailes (13) ou un pli (13a) qui sont/est, en particulier, configuré(es) en forme de croissant et qui sont/est plié(es) dans la direction vers l'espace intermédiaire.

18. Roulette pivotante (1) selon l'une quelconque des revendications 1 à 13, **caractérisée par** une butée qui est raccordée à la monture (3) de roulette et, dans une position bloquée, interagit de manière ajustée et/ou imposée avec la roulette (6) et avec une articulation rotoïde qui raccorde la monture (3) de roulette et la plaque support (2) de façon à pouvoir tourner autour de l'axe de rotation (V) vertical et, dans une position non bloquée, libère la roulette (6) et l'articulation de disque.

19. Roulette pivotante (1) selon la revendication 14, **caractérisée en ce que** la plaque de couverture (11) est configurée de telle manière que cette dernière laisse apparaître une zone de la sellette (7) qui, dans la position bloquée, interagit avec la butée de manière imposée.
